Europäisches Patentamt

European Patent Office

Office européen des brevets

(19)

(11) Numéro de publication : **0 289 417 B1**

(12)

# FASCICULE DE BREVET EUROPEEN

(45) Date de publication du fascicule du brevet :
**23.10.91 Bulletin 91/43**

(51) Int. Cl.$^5$ : **A01G 1/04**

(21) Numéro de dépôt : **88401019.0**

(22) Date de dépôt : **26.04.88**

(54) **Procédé de culture de champignons, sur compost supplémenté par un apport protéique et un apport enzymatique.**

(30) Priorité : **30.04.87 FR 8706199**

(43) Date de publication de la demande :
**02.11.88 Bulletin 88/44**

(45) Mention de la délivrance du brevet :
**23.10.91 Bulletin 91/43**

(84) Etats contractants désignés :
**ES GB IT NL**

(56) Documents cités :
**WO-A-82/00637
FR-A- 2 444 017
US-A- 4 534 781**

(73) Titulaire : **OSTRE, Louis
90, avenue Raymond Poincarré
F-75116 Paris (FR)**

(72) Inventeur : **OSTRE, Louis
90, avenue Raymond Poincarré
F-75116 Paris (FR)**

(74) Mandataire : **Le Roux, Martine et al
Cabinet Beau de Loménie 55, rue
d'Amsterdam
F-75008 Paris (FR)**

EP 0 289 417 B1

Jouve, 18, rue Saint-Denis, 75001 PARIS

## Description

La présente invention a pour objet un procédé de culture de champignons, sur compost supplémenté par un apport protéique et un apport enzymatique.

Le champignon de couche est cultivé sur un substrat particulier appelé compost. Sa culture comprend différentes étapes. On doit tout d'abord préparer ledit compost, que l'on ensemence ensuite par addition de "blanc de champignon". Cette opération d'ensemencement est appelée le lardage. Le compost ainsi ensemencé est ensuite conditionné, puis soumis à incubation. Au cours de ladite incubation, la masse du compost est envahie par le mycélium. A la suite de celle-ci, le compost est recouvert par de la "terre de gobetage", dont la présence est indispensable à la fructification. Ladite fructification se développe par à-coups. Les champignons poussent par "volées" successives, espacées d'une semaine environ, l'importance desdites "volées" diminuant avec le temps. Au cours de la culture, le compost est régulièrement arrosé.

Ledit compost est préparé le plus souvent à partir d'un mélange de paille de blé et de fumier de cheval, que l'on arrose et laisse se dégrader par auto-fermentation. A ce mélange, on ajoute, aux divers stades de fermentation, un certain nombre d'adjuvants, destinés soit à enrichir le compost en un élément donné, soit à favoriser ladite fermentation. Les rendements en culture (nombre de kg de champignons cueillis par tonne de compost mis en culture) de tels composts sont variables. Ces variations sont dues à la qualité des matières premières (pailles de l'année ou de l'année précédente, fumier plus ou moins dégradé...), aux conditions météorologiques qui ont présidé à leur dégradation et à de nombreux impondérables. Dans le prix de revient du champignon de couche, le poids des charges fixes — coût du compost et de ses traitements et manutentions diverses — est beaucoup plus important que le poids des charges, proportionnelles au poids de champignons cueillis. Etant donné l'intérêt économique en jeu, de nombreuses études ont été menées pour améliorer les rendements de culture.

Notamment, on a mis en évidence le fait que la diminution du rendement, au cours du temps, était due à l'appauvrissement du compost en substances nutritives.

On a donc proposé de pallier à cet appauvrissement en ajoutant au compost des protéines et/ou des acides gras, des produits carbonés facilement assimilables...

L'addition desdits produits carbonés ne s'est pas révélée intéressante. Elle encourage en fait la prolifération d'une flore concurrente sans augmenter, voire en diminuant, les rendements.

L'ajout au compost de protéines et/ou d'acides gras permet d'obtenir des augmentations de rendement, mais l'obtention de ces résultats positifs n'est pas systématique.

Il a été observé qu'une supplémentation azotée n'était favorable qu'à condition que le rapport azote/matière organique du compost soit situé à l'intérieur d'une certaine fourchette, variable selon les conditions de culture.

Lesdites augmentations de rendement varient avec la qualité du compost, les conditions de culture et la date d'incorporation des substances nutritives.

De plus, certains travaux ont montré que l'utilisation de protéines retardées — protéines tannées au formaldéhyde, telles que celles utilisées en alimentation des ruminants, pour les protéger d'une protéolyse bactérienne précoce au niveau de la panse — était particulièrement avantageuse. En effet, un apport supplémentaire de substances nutritives, alors que le mycélium n'est pas ou est mal installé dans le milieu, favorise la flore compétitive au détriment dudit mycélium.

L'utilisation de protéines retardées dans la culture des champignons est notamment décrite dans le brevet US-A-4534781.

Selon l'invention, on propose un procédé nouveau pour pallier à l'appauvrissement du compost en substance nutritive.

Ledit procédé consiste à supplémenter ledit compost, simultanément et de façon équilibrée, par un apport protéique, qui compense les déficiences dudit compost en acide aminés par rapport à la composition en acides aminés du mycélium et par un apport enzymatique, constitué d'enzymes cellulases et hemicellulases, qui libère des substances énergétiques directement assimilables par ledit mycélium.

Le demandeur a mis au point un apport nutritif complémentaire du compost qui, incorporé à de faibles doses, permet d'obtenir une augmentation de production de 10 à 40%.

L'innovation consiste à apporter au compost, simultanément, les protéines, dont le mycélium a besoin et qu'il ne trouve pas dans le compost, et des moyens d'utiliser lesdites protéines : un supplément énergétique. Cet apport complémentaire, destiné à pallier aux déficiences du compost, doit être équilibré. Les protéines et les enzymes doivent intervenir en quantité suffisante, pour influencer la croissance du mycélium. Toutefois, il convient de veiller à n'en pas rajouter en excès. Un excès d'enzymes impliquerait une croissance de microorganismes compétiteurs, un excès de protéines un risque d'hydrolyse bactérienne, par reprise de fermentation et libération d'ammoniac. Ledit ammoniac constitue un inhibiteur de croissance du mycélium.

La synergie de ces deux apports : apport protéique/apport énergétique permet une augmentation considérable de la production, par amélioration du taux de "conversion alimentaire" de l'agaricus. Selon l'invention, le compost supplémenté apporte des éléments constitutifs assimilables par le mycélium, prédigérés en quelque sorte et en équilibre.

En ce qui concerne l'apport protéique, il n'est pas, selon l'invention, considéré globalement en tant que tel ou en tant qu'apport d'azote, mais en tant qu'une somme des différents acides aminés, nécessaires au mycélium. Sa composition est calculée pour compléter, acide par acide, les besoins du mycélium. Il doit notamment apporter audit mycélium les acides aminés essentiels dont celui-ci ne peut assurer la synthèse pour constituer sa propre protéine.

Le compost se comporte comme un aliment qui contient environ l'équivalent de 11,25% de protéines brutes. La composition en acides aminés desdites protéines dépend de leur origine. On distingue généralement les protéines des matières premières (paille, fumier, adjuvants divers) plus ou moins transformées par la fermentation et les protéines bactériennes proprement dites dont la quantité disponible varie en fonction des techniques de compostage.

La protéine du champignon a une répartition en acides aminés assez proche de la protéine bactérienne. Celle-ci est donc bien utilisée par le mycélium, beaucoup plus en tout cas que la protéine de paille. Le compost ne doit donc pas être un "compost vert" peu fermenté, qui contient peu de protéines d'origine bactérienne ; à l'inverse, sa teneur ammoniacale ne doit pas être trop élevée, ceci traduisant une hydrolyse poussée des protéines non utilisées par le mycélium.

Ledit compost est toujours globalement déficient en acides aminés, par rapport à la composition du mycélium. C'est à cette déficience que pallie l'apport protéique selon l'invention.

Lesdits acides aminés déficients dans le compost et présents dans le mycélium sont par exemple la valine, l'arginine, l'acide glutamique, la méthionine, la cystine, le tryptophane...

En ce qui concerne l'apport enzymatique, il est constitué d'enzymes cellulases et hémicellulases. Elles doivent permettre l'hydrolyse enzymatique des glucides complexes, type cellulose et hémicellulose, pour libérer des substances énergétiques, directement assimilables par le mycélium.

Le procédé selon l'invention peut également faire intervenir des techniques connues.

Ainsi, le compost est-il également supplémenté en acides gras insaturés. Il s'agit principalement d'acide linoléique, apporté notamment sous la forme de graines de soja cuites entières.

D'autre part, notamment pour les raisons exposées ci-dessus, il est avantageux d'apporter des protéines dudit apport protéique, sous la forme de protéines retardées. La distribution dans le temps de l'apport nutritif complémentaire est alors optimisée.

Comme précisé ci-dessus, l'apport protéique consiste en des acides aminés, intervenant dans la composition du mycélium et que le compost est incapable de fournir à celui-ci. La valine, l'arginine, l'acide glutamique, la méthionine, la cystine, le tryptophane sont des exemples de tels acides aminés.

Lesdits acides aminés sont de préférence apportés sous forme de produits naturels. La teneur de ces produits en chacun desdits acides aminés est parfaitement connue.

On utilisera notamment :

— du tourteau de soja, qui contient de la valine, de l'acide glutamique, du tryptophane et d'autres acides aminés indispensables au mycélium, mais en principe non déficients dans le compost, telle la lysine ;

— du tourteau de tournesol, qui contient de la méthionine et de la thréonine ;

— de la farine de plumes hydrolysées, qui contient de l'acide glutamique et de la cystine ;

ou de la farine de poissons...

En ce qui concerne le tryptophane, on ne connaît pas de matières naturelles aussi riches en tryptophane que le champignon. En conséquence, toute formulation à base de produits naturels ne saurait compléter les besoins en tryptophane, sauf à augmenter la teneur globale en protéines, dont l'effet serait inverse au but recherché. On observerait alors une dégradation ammoniacale, des reprises de fermentation, un déséquilibre entre l'apport protéique et l'apport énergétique. L'apport protéique selon l'invention inclut donc le composé : tryptophane. Le champignon l'utilise sous sa forme lévogyre (1). Généralement, le supplément protéique selon l'invention inclut de 0,5 à 2 kg par tonne de (d, l) tryptophane.

On précise ci-après, à titre d'exemple, la composition d'une formulation convenant comme apport protéique aux fins de l'invention :

| | |
|---|---|
| Tourteau de soja (traité à 1% de formaldéhyde) | 55% |
| Tourteau de tournesol | 10% |
| Farine de plumes hydrolysées | 25% |
| Levures de brasserie | 5% |
| Tryptophane<br>Acides gras du soja<br>Amidons | 5% |

Les pourcentages ci-dessus sont des pourcentages en poids.

Ledit apport protéique, employé conjointement avec un apport énergétique, engendre des effets positifs à très faible dose. Il intervient, selon l'invention, à raison d'environ 0,25 à 1% en poids, par rapport au poids du compost brut, de préférence 0,4%.

Ledit apport enzymatique consiste en des enzymes cellulases et hémicellulases, qui agissent en synergie pour libérer des glucides fermentescibles à partir de la paille et du fumier composté. Il intervient environ 10 à 50 grammes d'hémicellulases et 50 à 250 grammes de cellulases, par tonne de matière sèche du compost. Selon l'invention, on a mis en évidence le fait qu'une cellulase alcaline est avantageusement utilisée. En effet, le pH du compost est d'environ 7-7,5. Des cellulases types SP 343 ® et SP 348 ®, commercialisées par la Société danoise NOVO, conviennent parfaitement.

L'apport nutritif complémentaire selon l'invention est incorporé dans le compost au lardage et/ou au gobetage. Son intervention au gobetage est particulièrement avantageuse, le mycélium ayant déjà, pendant sa phase initiale de croissance de neuf semaines, épuisé les éléments indispensables du compost.

Selon l'invention, on propose donc, pour augmenter les rendements de production de procédés de culture de champignons sur compost, de supplémenter lesdits composts, conjointement, par un apport protéique original et un apport énergétique, les deux apports étant équilibrés. On réalise ainsi un certain équilibre nutritionnel qui permet :

— de diminuer la quantité de compost à mettre en oeuvre par unité de production,

— de diminuer l'apport d'azote total par les éliminations des fractions azotées non indispensables — et non métabolisées — éminemment nuisibles aux rendements et génératrices de reprises de fermentation, d'échauffement et favorisant la croissance des compétiteurs.

Le besoin en protéine du champignon a été mieux cerné, l'apport protéique selon l'invention limité et optimisé.

Comme précisé ci-dessus, les résultats obtenus, en utilisant le procédé selon l'invention, sont très intéressants. A des doses d'incorporations faibles, la production est augmentée de 10 à 40%.

D'autres caractéristiques et avantages de l'invention seront mieux compris à la lecture de l'exemple ci-après de mise en oeuvre du procédé selon l'invention et à la considération des résultats d'essais comparatifs.

Pour la mise en oeuvre du procédé selon l'invention, les déficiences protéiniques du compost ont tout d'abord été évaluées. Les résultats de cette étude figurent dans le tableau I ci-après.

TABLEAU I

Composition comparée en acides aminés de la protéine du compost et du mycélyum agaricus avec calcul des déficiences et des suppléments à ajouter.

| | Compost après FDC (pasteurisation) % de la matière sèche | Mycélium Agaricus (moyenne) mg % MS | Apport compost | Déficience: coefficient $\frac{28}{11,25}$ ≠ 2,5 | Supplément à ajouter mg/% de la MS |
|---|---|---|---|---|---|
| N total | 2,11 | | | | |
| N minéral | 0,21 | | | | |
| N soluble | 0,06 | | | | |
| N protéine | 1,8 (1,8×6,25°= 11,25*) | | | | |
| Protéines (%) | 11,25* | 28 | | | |
| **Acides aminés non indispensables** | mg/100mg MS | | | | |
| Glycocolle | | | | | |
| etc | | | | | |
| — | | | | | |
| — | | | | | |
| — | | | | | |
| **Acides aminés indispensables ou supposés tels** | | | | | |
| 1 – <u>Non déficients</u> | | | | | |
| . Lysine | | | | | |
| . Alanine | | | | | |
| . Sérine | | | | | |
| . Aspartique | | | | | |
| . Aminobutyrique | | | | | |
| . Histidine | | | | | |
| . Ornithine | | | | | |
| . Tyrosine | | | | | |
| . Asparagine | | | | | |
| 2 – <u>Déficients</u> | | | | | |
| . Valine | 465 | 1630 | 1160 | 1/3 | 500 |
| . Leucine + iso-leucine | 815 | 815 | | | |
| . Thréonine | 348 | 1480 | 870 | 1/2 | 900 |
| . Glutamique | 1014 | 7060 | 2535 | 2/3 | 4500 |
| . Arginine | 290 | 1900 | 725 | 2/3 | 1200 |
| . Tryptophane | traces | 3940 | – | 3/3 | 4000 |
| . Proline | 406 | 2500 | – | | Non déterminé |
| . Cystine + méthionine | ? | 500 environ | | | Excès dans les suppléments classiques |

\* 11,25 (%) taux de protéines du compost
° 6,25 % d'azote dans la molécule de protéine du compost

Le supplément indiqué dans ce tableau est apporté par la formulation à base de tourteau de soja et de farine de plumes hydrolysées, dont la composition exacte est précisée à la page 5.

Ce supplément a été utilisé dans les tests décrits ci-après (lots 3, 4 et 5).

Des tests de production ont été réalisés en champignonnière sur 5 lots :

Lot 1 — témoin non supplémenté
Lot 2 — Témoin positif supplémenté par farine de plumes hydrolysées à la dose de 1%
Lot 3 — Lot expérimental : apport, protéique + enzymes, à la dose de 1%
Lot 4 — Lot expérimental : apport, protéique + enzymes, à la dose de 0,4%
Lot 5 — Témoin supplémenté : apport protéique seul, à la dose de 04%,

avec des champignons type : Caron petit blanc. On a utilisé deux séries de 20 sacs par lot. Le supplément, lorsqu'il intervient, intervient au lardage. La récolte a duré 64 jours, elle a été poursuivie pour certains lots jusqu'à 76 jours.

Pendant les 64 premiers jours :

● Le rendement des lots témoins (1, 5) est en moyenne de 22,4 kg de champignons pour 100 kg de compost. On n'observe pas de différences significatives entre ces deux lots.

● Le rendement des lots 2, 3 et 4 est en moyenne de 27,28 kg de champignons pour 100 kg de compost. On n'observe pas de différences significatives entre ces trois lots à 64 jours, mais il existait de telles différences significatives à 43 jours en faveur du lot 4.

Ceci est très important : le lot 4 atteint, à 43 jours, le même niveau de production que les témoins à 64 jours, ce qui représente une économie de 30% de la main-d'oeuvre par kg produit — poste de dépense le plus important de la production —.

La poursuite de la récolte jusqu'au 76e jour a donné les résultats suivants :

```
- Témoin non supplémenté (lot 1)                    ⎧ 24,5 kg de champi-
                                                    ⎪ gnons pour 100 kg
- Témoin supplémenté protéines seules sans          ⎨ de compost
  apport énergétique (lot 5)                        ⎩

- Lot expérimental n° 4 - supplément
  selon l'invention : protéines ÷ enzymes             30,81 kg
```

On note que l'utilisation du supplément selon l'invention permet l'obtention de résultats intéressants, avec une grande économie de protéines brutes. En effet, alors que la farine de plumes hydrolysées contient 85,5% de protéines, les apports selon l'invention (Lots 3 et 4) n'en contiennent que 43%. De plus, on notera que l'intervention de seulement 0,4% dudit apport selon l'invention est concluante. Il est ainsi possible d'éviter l'emploi d'un excès de protéines, qui ne fait que favoriser les compétiteurs et les reprises de fermentation.

D'autres tests ont été effectués et ont démontré que l'apport enzymatique seul ne conduit à aucune amélioration de production.

## Revendications

1. Procédé de culture de champignons sur compost, caractérisé en ce qu'il consiste à supplémenter ledit compost, simultanément et de façon équilibrée, par un apport protéique, qui compense les déficiences dudit compost en acides aminés par rapport à la composition en acides aminés du mycélium et par un apport enzymatique, constitué d'enzymes cellulases et hemicellulases, qui libère des substances énergétiques directement assimilables par ledit mycélium.

2. Procédé selon la revendication 1, caractérisé en ce qu'il consiste en outre à supplémenter ledit compost en acides gras insaturés.

3. Procédé selon l'une des revendications 1 ou 2, caractérisé en ce que ledit apport protéique comprend des protéines retardées.

4. Procédé selon l'une quelconque des revendications 1 à 3, caractérisé en ce que ledit apport protéique comprend du tryptophane.

5. Procédé selon l'une quelconque des revendications 1 à 4, caractérisé en ce que ledit apport protéique comprend de la valine, de l'arginine, de l'acide glutamique, de la méthionine, de la cystine et du tryptophane.

6. Procédé selon la revendication 5, caractérisé en ce que lesdits acides aminés, sauf le tryptophane, sont amenés sous la forme de produits tels le tourteau de soja, la farine de poisson, le tourteau de tournesol, la farine de plumes hydrolysées...

7. Procédé selon l'une quelconque des revendications 1 à 6, caractérisé en ce que ledit apport protéique consiste en la formulation :

```
55%  de tourteau de soja (traité à 1% de formaldéhyde)
10%  de tourteau de tournesol
25%  de farine de plumes hydrolysées
 5% de levures de brasserie
            ⎡ tryptophane
 5% de     ⎨ acides gras de soja
            ⎣ amidons
```

les pourcentages étant des pourcentages en poids.

8. Procédé selon l'une quelconque des revendications précédentes, caractérisé en ce que ledit apport protéique est ajouté à raison d'environ 0,25 à 1% en poids, par rapport au poids du compost brut.

9. Procédé selon l'une quelconque des revendications précédentes, caractérisé en ce que ledit apport énergétique est constitué d'environ 10 à 50 grammes d'hémicellulases et 50 à 250 grammes de cellulases, par tonne de matière première sèche.

10. Procédé selon l'une quelconque des revendications précédentes, caractérisé en ce que ledit apport énergétique comprend une cellulase alcaline.

11. Procédé selon l'une quelconque des revendications précédentes, caractérisé en ce que lesdits apports protéique et énergétique interviennent simultanément au lardage et/ou au gobetage.

## Patentansprüche

1. Kulturverfahren für Pilze auf Kompost, dadurch **gekennzeichnet**, daß es darin besteht, den Kompost gleichzeitig und in ausgeglichener Weise durch einen eiweißhaltigen Zusatz, der den Mangel des Komposts an Aminosäuren bezüglich der Zusammensetzung des Myzels an Aminosäuren komnensiert, und durch einen enzymatischen, aus Cellulase und Hemicellulaseenzymen gebildeten Zusatz anzureichern, der direkt durch das Myzel assimilierbare energetische Stoffe freisetzt.

2. Verfahren nach dem Anspruch 1, dadurch gekennzeichnet, daß es außerdem darin besteht, den Kompost mit ungesättigten Fettsäuren anzureichern.

3. Verfahren nach einem der Ansprüche 1 oder 2, dadurch gekennzeichnet, daß der eiweißhaltige Zusatz retardierte Proteine aufweist.

4. Verfahren nach irgendeinem der Ansprüche 1 bis 3, dadurch gekennzeichnet, daß der eiweißhaltige Zusatz Tryptophan aufweist.

5. Verfahren nach irgendeinem der Ansprüche 1 bis 4, dadurch gekennzeichnet, daß der eiweißhaltige Zusatz Valin, Arginin, Glutaminsäure, Methionin, Cystin und Tryptophan aufweist.

6. Verfahren nach dem Anspruch 5, dadurch gekennzeichnet, daß die Aminosäuren außer dem Tryptophan in der Form von Stoffen wie Sojamsse, Fischmehl, Lackmusmasse, Mehl von hydrolisierten Federn... zugeführt werden.

7. Verfahren nach irgendeinem der Ansprüche 1 bis 6, dadurch gekennzeichnet, daß der eiweißhaltige Zusatz aus der Zusammensetzung :

```
55 %   Sojamasse (mit 1 % Formaldehyd behandelt)

10 %   Lackmusmasse

25 %   Mehl von hydrolisierten Federn

5 %   Brauereihefen
         ⎧ Tryptophan
5 %     ⎨ Sojafettsäuren
         ⎩ Stärkemehle
```

besteht, wobei die Prozentsätze Gewichtsprozentsätze sind.

8. Verfahren nach irgendeinem der vorstehenden Ansprüche, dadurch gekennzeichnet, daß der eiweißhaltige Zusatz im Verhältnis von etwa 0,25 bis 1 Gewichtsprozent, bezogen auf das Gewicht des Rohkomposts, zugeführt wird.

9. Verfahren nach irgendeinem der vorstehenden Ansprüche, dadurch gekennzeichnet, daß der energetische Zusatz aus etwa 10 bis 50 Gramm Hemicellulasen und 50 bis 250 Gramm Cellulasen je Tonne trockenen Ausgangsmaterials besteht.

10. Verfahren nach irgendeinem der vorstehenden Ansprüche, dadurch gekennzeichnet, daß der energetische Zusatz eine alkalische Cellulase aufweist.

11. Verfahren nach irgendeinem der vorstehenden Ansprüche, dadurch gekennzeichnet, daß die eiweißhaltigen und energetischen Zusätze gleichzeitig mit dem Impfen und/oder Bedecken mit Erde erfolgen.

## Claims

1. A process for cultivating mushrooms on compost, consisting in adding to said compost, simultaneously and in a balanced way, a protein supply, which compensates the compost deficiencies in amino acids with respect to the amino acid composition of the mycelium, and an enzyme supply, constituted of cellulase and hemi-cellulase enzymes, which releases energetic substances directly assimilable by said mycelium.

2. Process according to claim 1, characterized in that it further consists in adding unsaturated fatty acids to said compost.

3. Process according to one of claims 1 or 2, characterized in that said protein supply contains delayed proteins.

4. Process according to any one of claims 1 to 3, characterized in that said protein supply contains tryptophane.

5. Process according to any one of claims 1 to 4, characterized in that said protein supply contains valine, arginine, glutamic acid, methionine, cystine and tryptophane.

6. Process according to claim 5, characterized in that said amino acids, with the exception of tryptophane, are supplied in the form of products such as soybean cake, ground fish, sunflower seed cake, ground hydrolyzed feathers,...

7. Process according to any one of claims 1 to 6, characterized in that said protein supply consists in the formulation :

```
55%   soybean cake (1% formaldehyde treated)
10%   sunflower seed cake
25%   ground hydrolyzed feathers
5%    brewers yeasts
         (tryptophane
5%      (soya fatty acids
         (starches
```

the percentages given being percentages by weight.

8. Process according to any one of the preceding claims, characterized in that said protein supply is added in the proportion of about 0.25 to 1% by weight, with respect to the weight of raw compost,

9. Process according to any one of the preceding claims, characterized in that said energetic supply is constituted by about 10 to 50 grammes of hemicellulases and 50 to 250 grammes of cellulases, per ton of dry raw material.

10. Process according to any one of the preceding claims, characterized in that said energetic supply contains an alkaline cellulase.

11. Process according to any one of the preceding claims, characterized in that said protein and energetic supplies act simultaneously during spawning and/or during casing.